# EUROPÄISCHE PATENTANMELDUNG

(11) **EP 4 684 928 A1**
(43) Veröffentlichungstag der Anmeldung: **28.01.2026**
(21) Anmeldenummer: 25187202.4
(22) Anmeldetag: 03.07.2025
(51) Int. Cl.: B25J 15/02, B25J 15/04

(54) **VORRICHTUNG ZUM BEHANDELN VON BEHÄLTERN, INSBESONDERE GROSSVOLUMIGEN GETRÄNKEBEHÄLTERN**

(30) Priorität: 25.07.2024 DE 102024121264
(71) Anmelder: KHS GmbH, 44143 Dortmund (DE)
(72) Erfinder: Mann, Alexander, 44143 Dortmund (DE); Rübsaamen, Martin, 44143 Dortmund (DE)

(57) **Zusammenfassung**

Die Erfindung betrifft eine Vorrichtung zum Behandeln von Behältern (10), insbesondere großvolumigen Getränkebehältern, mit einer Greifeinrichtung (100) mit zumindest einer, insbesondere pneumatisch, in einer Greifrichtung bewegbaren Greiferbacke (110) und mindestens einen Anschlag (120), der sich von einem Oberteil (130) der Greifeinrichtung (100) in axialer Richtung der jeweiligen Behälter (10) senkrecht zur Greifrichtung nach unten erstreckt, wobei die Vorrichtung zum Behandeln von Behältern (10) mit unterschiedlichen Durchmessern ausgebildet ist, wobei die mindestens eine Greiferbacke (110) ein behälterabhängiges auswechselbares Formatteil (111) zum Kontaktieren der Behälter (10) aufweist und wobei der Anschlag (120) behälterabhängig an in Greifrichtung voneinander beabstandeten unterschiedlichen Positionen an dem Oberteil (130) der Greifeinrichtung (100) fixierbar ist.

## Beschreibung

### Technisches Gebiet

Die Erfindung betrifft eine Vorrichtung zum Behandeln von Behältern, insbesondere großvolumigen Getränkebehältern, mit einer Greifeinrichtung mit zumindest einer, insbesondere pneumatisch, in einer Greifrichtung bewegbaren Greiferbacke und mindestens einem Anschlag, der sich von einem Oberteil der Greifeinrichtung in axialer Richtung der jeweiligen Behälter senkrecht zur Greifrichtung nach unten erstreckt.

### Stand der Technik

Vorrichtungen zum Behandeln von großvolumigen Getränkebehältern sind im Stand der Technik bekannt. Bei den großvolumigen Getränkebehältern handelt es sich um Behälter, die ein Volumen von fünf oder mehr Litern, beispielsweise 5 Liter, 10 Liter, 30 Liter oder 50 Liter, aufweisen. Bei Getränkebehältern handelt es sich um Behälter, in denen Getränke aufgenommen sind.

Oft werden großvolumige Getränkebehälter heutzutage nach ihrer Befüllung im Sinne eines Mehrzwecksystems zurückgereicht und wiederverwendet. Die Behälter werden dann gereinigt und erneut befüllt. Üblicherweise sind großvolumige Getränkebehälter aus Metall, beispielsweise Aluminium oder Edelstahl hergestellt und verfügen über ein nicht unerhebliches Gewicht. Entsprechend erfordert Ihre Handhabung beim Entladen, Reinigen und gegebenenfalls zur Befüllung maschinell arbeitende Manipulatoren und sollte aufgrund der auftretenden körperlichen Belastungen nicht manuell vorgenommen werden.

Daher sind im Stand der Technik maschinell arbeitende Manipulatoren als Vorrichtungen zum Behandeln der Behälter entwickelt worden.

Beispielsweise schlägt die DE 299 19 624 U1 eine Vorrichtung zur Behandlung von Behältern, beispielsweise KEGS vor. Die Vorrichtung ist hierbei insbesondere zum Umsetzen der Behälter geeignet und verfügt hierzu über einen gesteuert bewegbaren Geräteträger sowie wenigstens einen am Geräteträger vorgesehenen Mehrfachgreifer. Mit Hilfe des Mehrfachgreifers lassen sich gleichzeitig mehrere Behälter greifen und halten. Der Mehrfachgreifer verfügt zwischen wenigstens drei Greiferbacken über zumindest zwei Aufnahmen für jeweils einen Behälter.

Weiterhin schlägt der gattungsbildende Stand der Technik nach der WO 2010/003551 A1 eine Vorrichtung zum Behandeln von Behältern, insbesondere von großvolumigen Getränkebehältern, wie beispielsweise KEGS vor. Die dort beschriebene Greifervorrichtung weist zumindest eine Greiferbacke und einen gegenüber dieser wenigstens in Behälterebene bewegbaren Anschlag auf. Dabei ist der Anschlag zusätzlich in axialer Richtung des jeweiligen Behälters verfahrbar ausgebildet.

Auch wenn aus dem Stand der Technik vielfältige Greifvorrichtungen bekannt sind, sind die bekannten Vorrichtungen zum Behandeln von Behältern nicht ideal zur Verwendung unterschiedlich großer Behälter geeignet.

Wünschenswert wäre es daher, eine Vorrichtung zum Behandeln von Behältern anzugeben, die universeller, also bei unterschiedlichen Behälterarten und bei unterschiedlicher Anzahl von Behältern anwendbar ist.

### Darstellung der Erfindung

Der Erfindung liegt daher die Aufgabe zugrunde, eine Vorrichtung zum Behandeln von Behältern zu schaffen, die die oben genannten Probleme und Nachteile des Standes der Technik ausräumt. Insbesondere ist es Aufgabe der vorliegenden Erfindung, eine Vorrichtung zum Behandeln von Behältern anzugeben, die besonders universell einsetzbar ist und vorzugsweise einfach an einen Roboter angebunden werden kann.

Diese Aufgaben werden durch die Gegenstände der unabhängigen Ansprüche gelöst. Weitere mögliche Ausgestaltungen der Erfindung sind insbesondere in den abhängigen Ansprüchen angegeben.

Die erfindungsgemäße Lösung besteht insbesondere darin, eine Vorrichtung zum Behandeln von Behältern, insbesondere großvolumigen Getränkebehältern anzugeben. Die Vorrichtung zum Behandeln von Behältern weist eine Greifeinrichtung mit zumindest einer, insbesondere pneumatisch, in einer Greifrichtung bewegbaren Greiferbacke auf. Ferner weist die Greifeinrichtung mindestens einen Anschlag auf, der sich von einem Oberteil der Greifeinrichtung in axialer Richtung der jeweiligen Behälter senkrecht zur Greifrichtung nach unten erstreckt.

Die Erfindung zeichnet sich dadurch aus, dass die Vorrichtung zum Behandeln von Behältern mit unterschiedlichen Durchmessern ausgebildet ist. Die Vorrichtung ist also dazu ausgebildet, unterschiedlich große Behälter zu behandeln. Hierzu weist die mindestens eine Greiferbacke ein behälterabhängiges, auswechselbares Formatteil zum Kontaktieren der Behälter auf. Außerdem ist der Anschlag behälterabhängig an in Greifrichtung voneinander beabstandeten unterschiedlichen Positionen an dem Oberteil der Greifeinrichtung fixierbar.

Eine Vorrichtung zum Behandeln von Behältern ist ganz allgemein eine Vorrichtung zur Handhabung, insbesondere zum Umsetzen, von Behältern.

Der Begriff "Behälter" bezeichnet im Sinne der vorliegenden Erfindung einstückige oder aus mehreren fest miteinander verbundenen Teilen gebildete Körper. Dabei weist jeder Körper im Inneren einen Hohlraum auf und ist dazu ausgebildet, diesen Hohlraum von der Umgebung abzutrennen. Bei den Behältern kann es sich beispielsweise um Behälter zur Aufbewahrung von Lebensmitteln und oder von flüssigen, viskosen oder pastösen Substanzen handeln. Besonders bevorzugt handelt es sich bei den Behältern um Getränkebehälter. Insbesondere handelt es sich bei den Behältern um großvolumige Behälter. Dabei wird als großvolumiger Behälter ein Behälter mit einem Volumen von fünf oder mehr Litern verstanden.

Als Greifeinrichtung wird der Mechanismus der Vorrichtung verstanden, der zum Fassen, Halten und vorzugsweise Manipulieren der Behälter ausgebildet ist. Hierzu weist die Greifeinrichtung die in Greifrichtung relativ zur restlichen Greifeinrichtung, insbesondere dem Oberteil, bewegbare Greiferbacke auf. Wenn nebeneinander aufgereihte Behälter gegriffen werden sollen, entspricht die Greifrichtung vorzugsweise der Richtung, in der die Behälter aufgereiht sind.

Weiterhin weist die Greifeinrichtung hierzu den Anschlag auf. Der Anschlag ist dazu ausgebildet, mit mindestens einen Behälter in Kontakt zu kommen. Hierzu erstreckt sich der Anschlag in eine Behälterlücke zwischen zwei angrenzenden Behältern. Die Greiferbacke ist dazu ausgebildet, zumindest einen Behälter gegen den mindestens einen Anschlag zu drücken. Der Anschlag ist vorzugsweise nicht in axialer Richtung relativ zu dem Oberteil verfahrbar. Vielmehr ist der Anschlag in axialer Richtung starr, also nicht bewegbar an dem Oberteil Angeordnet. Beispielsweise ist der Anschlag hierzu in einer entsprechenden Schiene angeordnet.

Um Behälter mit unterschiedlichen Durchmessern behandeln zu können, weist die mindestens eine Greiferbacke das behälterabhängige auswechselbare Formatteil auf. Das Formatteil ist der Teil der Greiferbacke, der mit den Behältern in Kontakt kommt. Durch ein Auswechseln des Formatteils, kann die Greiferbacke somit für unterschiedliche Arten von Behältern ausgerüstet werden. Beispielsweise lassen sich so Behälter mit unterschiedlichen Durchmessern oder unterschiedliche Fässer oder unterschiedliche KEGS oder Keykegs greifen. Da der Anschlag behälterabhängig an unterschiedlichen Positionen an dem Oberteil der Greifeinrichtung fixierbar ist, lässt sich auch der Anschlag beziehungsweise dessen Position an die unterschiedlichen Behälterarten anpassen.

Wenn also eine andere Behälterart behandelt werden soll, kann die Greifeinrichtung durch Auswechseln des Formatteils und durch Verändern der Position des Anschlags an die andere Behälterart angepasst werden.

So ist die Vorrichtung zum Behandeln von Behältern flexibel und universell einsetzbar. Die Vorrichtung kann durch einfache Arbeitsschritte auf ein anderes Behälterformat angepasst werden.

Gemäß einer vorteilhaften Weiterbildung der Erfindung ist das Formatteil mittels Klemmhebel an der Greiferbacke fixierbar. Alternativ oder zusätzlich hierzu ist der Anschlag mittels Klemmhebel an dem Oberteil fixierbar.

Vorzugsweise sind hierbei mehrere Klemmhebel zum Fixieren des Formatteils und oder mehrere Klemmhebel zum Fixieren des Anschlags vorgesehen. Beispielsweise sind mindestens zwei Klemmhebel zum Fixieren der Greiferbacke ausgebildet. Weiterhin beispielsweise sind mindestens vier Klemmhebel zum Fixieren des Anschlags ausgebildet.

Durch die Klemmhebel ist ein einfacher und unkomplizierter Wechsel des Formatteils und des Anschlags möglich. Zudem kann der Wechsel werkzeuglos erfolgen, da sich die Klemmhebel rein manuell öffnen und schließen lassen.

Bei einer vorteilhaften Weiterbildung der Erfindung ist der Anschlag in einer Schiene des Oberteils in Greifrichtung gleitend geführt. Vorzugsweise ist der Anschlag hierbei stufenlos verschiebbar. Weiterhin vorzugsweise ist der Anschlag, insbesondere mittels der Klemmhebel, starr an der Schiene fixierbar.

Der Anschlag ist vorzugsweise nicht automatisch in Greifrichtung verfahrbar. Vielmehr erfolgt ein Verstellen des Anschlags durch manuelles Lösen der Klemmhebel und durch Verschieben des Anschlags innerhalb der Schiene. An der gewünschten neuen Position wird der Anschlag dann durch Schließen der Klemmhebel wieder starr an der Schiene fixiert. Da der Anschlag in der Schiene geführt ist, ist ein einfaches Verstellen des Anschlags möglich. Der Anschlag kann vorzugsweise nur in die Greifrichtung verschoben werden. Weiterhin lässt die Schiene in Kombination mit der Klemmhebel ein stufenloses Verschieben des Anschlags zu. Hierdurch kann der Anschlag präzise an die unterschiedlichen Behälter angepasst werden.

Die Klemmhebel sind im geöffneten Zustand dazu ausgebildet, ein Verschieben des Anschlags in der Schiene zu ermöglichen. Im geschlossenen Zustand blockieren die Klemmhebel ein Verschieben des Anschlags relativ zur Schiene.

Unabhängig davon weist die Schiene vorzugsweise zwei parallel verlaufende, voneinander beabstandete Einzelschienen auf, in denen jeweils ein Teil des Anschlags geführt ist. Der Anschlag ist also an zwei voneinander beabstandeten Stellen an der Schiene gleitend geführt.

Gemäß einer vorteilhaften Weiterbildung der Erfindung ist an dem Oberteil eine Formateinstellungseinrichtung angeordnet, die zum korrekten Positionieren des Anschlags in, insbesondere gewünschten, behälterabhängigen Positionen am Oberteil ausgebildet ist. Mit anderen Worten ist die Formateinstellungseinrichtung eine Positionierhilfe, mittels derer die gewünschte behälterabhängige Position einfach einstellbar ist.

Vorzugsweise weisen die Formateinstellungseinrichtung und der Anschlag hierzu eine entsprechende Schlüsselung auf. Dabei sind Teile der Formateinstellungseinrichtung und Teile des Anschlags derart geformt, dass der Anschlag nur in bestimmte Positionen in die Formateinstellungseinrichtung passt. Lediglich beispielsweise weisen die Formateinstellungseinrichtung und der Anschlag hierbei zum Positionieren komplementär zueinander ausgebildete und in Eingriff bringbare Kontaktflächen auf. Beispielsweise kann der Anschlag einen Vorsprung und die Formateinstellungseinrichtung eine entsprechende Ausnehmung aufweisen. Wenn der Vorsprung in der Ausnehmung angeordnet ist, befindet sich der Anschlag an der gewünschten Position.

Bei der Formateinstellungseinrichtung kann es sich beispielsweise um ein zumindest im Wesentlichen stabförmiges Element handeln, das sich in Greifrichtung erstreckt. Weiterhin beispielsweise kann die Formateinstellungseinrichtung oberhalb der Schiene an dem Oberteil angeordnet sein.

Unabhängig davon ist die Formateinstellungseinrichtung vorzugsweise auswechselbar ausgebildet. Besonders bevorzugt existieren mehrere voneinander unterschiedliche, insbesondere behälterformatabhängige, Formateinstellungseinrichtungen. Mit anderen Worten kann die Vorrichtung mehrere behälterformatabhängige Formateinstellungseinrichtungen aufweisen. Soll nun das Behälterformat oder die zu behandelnde Anzahl der Behälter an der Vorrichtung verändert werden, kann die Formateinstellungseinrichtung entsprechend ausgetauscht werden.

Die Formateinstellungseinrichtung beschleunigt und vereinfacht somit das Umrüsten des Anschlags auf ein anderes Behälterformat bzw. eine andere Anzahl von zu bearbeitenden Behältern.

Gemäß einer vorteilhaften Weiterbildung der Erfindung weist der Anschlag eine geringere Querschnittsfläche als eine Behälterlücke, insbesondere zwischen in Greifrichtung aufgereihten Behältern auf.

Da der Anschlag eine geringere Querschnittsfläche als die entsprechende Behälterlücke aufweist, kann der Anschlag einfach in die Behälterlücken eingesetzt werden.

Bei einer vorteilhaften Weiterbildung der Erfindung ist der Anschlag zumindest im Wesentlichen stabförmig ausgebildet und erstreckt sich in axialer Richtung der Behälter.

Durch die stabförmige Ausbildung kommt der Anschlag, insbesondere linienförmig, mit dem Außenmantel der Behälter in Kontakt. Die Behälter weisen in der Regel in axialer Richtung gesehen einen kreisförmigen Querschnitt auf. So lässt sich mittels des Anschlags ein punkt- bzw. linienförmiger Kontakt mit den Behältern umsetzen. Der Anschlag taucht also in die jeweilige Behälterlücke ein und dient dann dort als Anschlag für die angrenzenden Behälter.

Unabhängig davon weist das Formatteil der Greiferbacke vorzugsweise zwei Kontaktelemente auf. Die Kontaktelemente sind hierbei besonders bevorzugt stabförmig ausgebildet und erstrecken sich in axialer Richtung der Behälter. So kommen auch die Formatteile in einen linienförmigen Kontakt mit dem Außenmantel der Behälter. Die Formatteile und der Anschlag sind somit für eine Dreipunkt-Klemmung der jeweiligen Behälter ausgebildet.

Der Kontakt der Greifeinrichtung erfolgt also durch eine Kontaktierung der äußeren Mantelfläche. Dies ist vorteilhaft, da es beim Greifen von großvolumigen Behältern an ihren oberen Rand zu Beschädigung oder Verschmutzung des Randes kommen kann. Mit der Kontaktierung an der Mantelfläche ist eine schonende Handhabung der Behälter möglich.

Gemäß einer vorteilhaften Weiterbildung der Erfindung weist der Anschlag einen in axialer Richtung zu den jeweiligen Behältern relativ zum restlichen Anschlag verschiebbaren Stößel auf. Der Stößel ist hierbei vorzugsweise also verschiebbar im Anschlag gelagert.

Besonders bevorzugt ist der Stößel zumindest im Wesentlichen konzentrisch im Anschlag angeordnet. Der Stößel steht vorzugsweise an einem unteren Ende über den restlichen Anschlag über. Wird also der Anschlag, gemeinsam mit der Greifeinrichtung, nach unten verfahren, ist der Stößel das erste Teil des Anschlags, das mit einem Gegenstand, beispielsweise einem Behälter, in Kontakt kommt. Kommt der Stößel mit dem Behälter in Kontakt, verschiebt sich der Stößel relativ zum restlichen Anschlag nach oben. Dabei wird ein oberer Teil des Stößels oben aus dem restlichen Anschlag hinaus bewegt. Dieser obere Teil ist dann mittels einer Detektionseinrichtung detektierbar. Vereinfacht ist der verschiebbare Stößel beim Kontakt mit einem Behälter nach oben verschiebbar angeordnet und dann detektierbar. Vorzugsweise weist dabei die Vorrichtung eine Detektionseinrichtung zum Detektieren einer Position des Stößels auf. Hierbei ist es ausreichend, wenn die Detektionseinrichtung lediglich eine Position des Stößels detektieren kann. Beispielsweise kann es sich bei der Detektionseinrichtung um eine Laserschranke handeln.

Durch den verschiebbaren Stößel und die Detektionseinrichtung kann verhindert werden, dass die Greifeinrichtung beziehungsweise der Anschlag gemeinsam mit der Greifeinrichtung von oben auf einen zu behandelnden Behälter auffährt.

Wenn die Detektionseinrichtung entsprechend einen Kontakt mit einem Behälter detektiert, wird ein Nothalt ausgeführt, der verhindert, dass der Anschlag beziehungsweise die Greifeinrichtung und der Anschlag sich weiter nach unten bewegen.

Gemäß einer vorteilhaften Weiterbildung der Erfindung weist die Greifeinrichtung mindestens zwei, vorzugsweise genau zwei, insbesondere baugleiche, Anschläge auf, die in Greifrichtung voneinander beabstandet angeordnet sind.

Je nach Anzahl der zu greifenden Fässer sind an der Greifeinrichtung ein oder zwei Anschläge ausgebildet. Insbesondere sind dann zwei Anschläge ausgebildet, wenn eine ungerade Anzahl von einreihig aufgereihten Behältern gegriffen werden soll. Dann werden die Anschläge, insbesondere links und rechts in Greifrichtung, an dem mittleren Behälter positioniert. Es werden also insbesondere dann zwei Anschläge verwendet, wenn drei oder fünf Behälter gegriffen werden sollen. Beim Greifen einer geraden Anzahl von Behältern ist ein Anschlag ausreichend. Dieser wird dann in der Mitte der Behälterreihe positioniert und kommt mit den zwei angrenzenden Behältern in Kontakt. So lässt sich durch das Verändern der Anzahl der Anschläge die Greifeinrichtung auf die zu greifende Anzahl der Behälter umrüsten.

Bei einer vorteilhaften Weiterbildung der Erfindung weist die Greifeinrichtung eine in einer Richtung senkrecht zur Greifrichtung und senkrecht zur axialen Richtung der Behälter bewegbare Andrückeinrichtung auf.

Die Andrückeinrichtung ist insbesondere pneumatisch bewegbar. Die Andrückeinrichtung ist insbesondere dazu ausgebildet, die Behälter in Richtung der Anschläge zu drücken. Entsprechend ist die Andrückeinrichtung auf die Anschläge zu bewegbar.

Die Andrückeinrichtung ist vorzugsweise an einem unteren Bereich der Greifeinrichtung angeordnet.

Bei in einer Reihe aufgereihten Behältern bewegt sich die Greiferbacke in Greifrichtung entlang der Aufreihung der Behälter und die Andrückeinrichtung senkrecht zu den aufgereihten Behältern und senkrecht zur axialen Richtung der Behälter.

Bei einer vorteilhaften Weiterbildung der Erfindung weist die Andrückeinrichtung ein behälterabhängiges, auswechselbares Formatteil auf. So ist auch die Andrückeinrichtung an unterschiedliche Behälterformate bzw. an eine unterschiedliche Anzahl von Behältern anpassbar. Das Formatteil ist hierbei vorzugsweise ebenfalls mittels Klemmhebel an der Andrückeinrichtung fixierbar. Dabei ergeben sich die gleichen Vorteile wie bei den Klemmhebeln der Greiferbacke bzw. des Anschlags.

Bei einer vorteilhaften Weiterbildung der Erfindung weist die Greifeinrichtung zwei, insbesondere baugleiche, Greiferbacken auf, die zum Greifen von insbesondere aufgereihten Behältern in Greifrichtung, insbesondere pneumatisch, aufeinander zu bewegbar sind.

Dabei sind die Greiferbacken relativ zu dem Oberteil verfahrbar, an dem die Anschläge bzw. der Anschlag fixiert ist. Zum Greifen der Behälter wird somit zumindest ein Anschlag in eine Behälterlücke zwischen zwei angrenzenden Behältern geschoben.

Dann werden die aufgereihten Behälter durch die Greiferbacken seitlich gegeneinander bzw. gegen den Anschlag gedrückt und durch die Andrückeinrichtung nach vorne gegen den Anschlag gedrückt. Bei einer vorteilhaften Weiterbildung der Erfindung weist die Greifeinrichtung zusätzlich eine heb-, und/oder senkbare Palettengreifeinrichtung auf.

Die Palettengreifeinrichtung ist hierbei vorzugsweise an der Greiferbacke bzw. den Greiferbacken angeordnet. Bei der Palettengreifeinrichtung handelt es sich um eine von den Greiferbacken verschiedene Einrichtung. Die Palettengreifeinrichtung ist allgemein dazu ausgebildet, Paletten zu greifen.

Ferner wird die Aufgabe der vorliegenden Erfindung durch eine Vorrichtung zum Behandeln von Behältern, insbesondere großvolumigen Getränkebehältern, gelöst. Die Vorrichtung weist eine Greifeinrichtung mit zumindest einer, insbesondere pneumatisch, in einer Greifrichtung bewegbaren Greiferbacke und mindestens einen Anschlag auf, der sich von einem Oberteil der Greifeinrichtung in axialer Richtung der jeweiligen Behälter senkrecht zur Greifrichtung nach unten erstreckt.

Die Vorrichtung weist eine Verschiebeeinheit auf, die zur Anbindung der Greifeinrichtung an einen Roboterflansch ausgebildet ist. Dabei weist die Verschiebeeinheit zumindest eine Linearverstellungseinrichtung auf, mittels derer die Position der Greifeinrichtung relativ zum Roboterflansch verstellbar ist. Dabei ist die Position zumindest in eine lineare Richtung verstellbar. Vorzugsweise ist die Linearverstellungseinrichtung zum Verstellen der Position innerhalb einer Verstellebene ausgebildet. Dann ist die Linearverstellungseinrichtung vorzugsweise zum Verstellen in zwei senkrecht zueinander ausgerichteten Richtungen ausgebildet. Die Linearverstellungseinrichtung kann dann beispielsweise aus zwei Linearverstellungseinheiten aufweisen, die in senkrecht zueinander ausgerichteten Richtungen bewegbar sind.

Bei der Verschiebeeinheit handelt es sich um einen von der Greifeinrichtung unabhängig beanspruchbaren erfinderischen Gegenstand. Dann betrifft der Gegenstand eine Vorrichtung mit einer Verschiebeeinheit, die zur Anbindung eines Werkzeugs, insbesondere einer Greifeinrichtung, an einen Roboterflansch ausgebildet ist, wobei die Verschiebeeinheit zumindest eine Linearverstellungseinrichtung aufweist, mittels derer die Position des Werkzeugs, insbesondere der Greifeinrichtung, relativ zum Roboterflansch verstellbar ist.

Die Linearverstellungseinrichtung ist also zur Anbindung eines Werkzeugs bzw. der Greifeinrichtung an den Roboterflansch ausgebildet. Durch die Linearverstellungseinrichtung ist ein lineares, insbesondere zweidimensionales, Verstellen der Position des Werkzeugs am Roboterflansch möglich.

Unterschiedliche Werkzeuge haben unterschiedliche Schwerpunkte. Durch die Verschiebeeinheit, die zwischen dem Roboterflansch und dem Werkzeug angeordnet ist, lässt sich der Schwerpunkt des Werkzeugs am Roboterflansch, insbesondere zweidimensional, verstellen.

Bisher war es nötig, bei der Konstruktion eines Werkzeugs für einen Roboter, auch als Roboterkopf bezeichnet, den Schwerpunkt konstruktiv so anzuordnen, dass in allen Betriebszuständen zulässige Werte bei der Traglast nicht überschritten werden. Beim Überschreiten von zulässigen Werten kann es zum erhöhten Verschleiß oder Beschädigungen am Roboter kommen.

Bei der Konstruktion von Werkzeugen bzw. Roboterköpfen müssen aufgrund der Vielfalt von Funktionen, Platzverhältnissen und Gewicht immer Kompromisse eingegangen werden. Die Lage des Schwerpunktes ist hierbei ein zwingend zu beachtender Aspekt, der großen Einfluss auf das Konzept des jeweiligen Roboterkopfes hat.

Mittels der zwischengeschalteten Verschiebeeinheit ist es nun möglich, den Schwerpunkt des Werkzeugs zu verschieben. Dabei erfolgt zumindest eine Verschiebung in eine lineare Richtung.

Die Verschiebeeinheit ist zumindest im Wesentlichen plattenförmig ausgebildet. Dabei ist ein Oberteil zum Anbinden an den Roboterflansch ausgebildet. Ein zumindest linear zu dem Oberteil verschiebbares Unterteil ist zur Anbindung mit dem Werkzeug ausgebildet. Die Verschiebung des Unterteils relativ zum Oberteil erfolgt mittels der Linearverstellungseinrichtung.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Weitere Merkmale, Vorteile und Ausführungsformen der Erfindung ergeben sich aus der nachfolgenden Beschreibung von Ausführungsbeispielen und anhand der folgenden Figuren.

Die zur Erläuterung der Ausführungsbeispiele verwendeten Figuren zeigen:
Fig. 1. eine perspektivische Darstellung einer erfindungsgemäßen Vorrichtung zum Behandeln von Behältern mit fünf zu behandelnden Behältern;
Fig. 2 eine perspektivische Darstellung einer erfindungsgemäßen Vorrichtung zum Behandeln von Behältern mit vier Behältern;
Fig. 3 eine perspektivische Darstellung einer erfindungsgemäßen Vorrichtung zum Behandeln von Behältern mit drei Behältern;
Fig. 4 die in Fig. 1 gezeigte Vorrichtung von unten;
Fig. 5 eine Detailansicht der Anschläge;
Fig. 6 eine Seitenansicht einer erfindungsgemäßen Vorrichtung mit einer Verschiebeeinheit; und
Fig. 7 die in Fig. 6 verwendete Verschiebeeinheit.

### Wege zur Ausführung der Erfindung

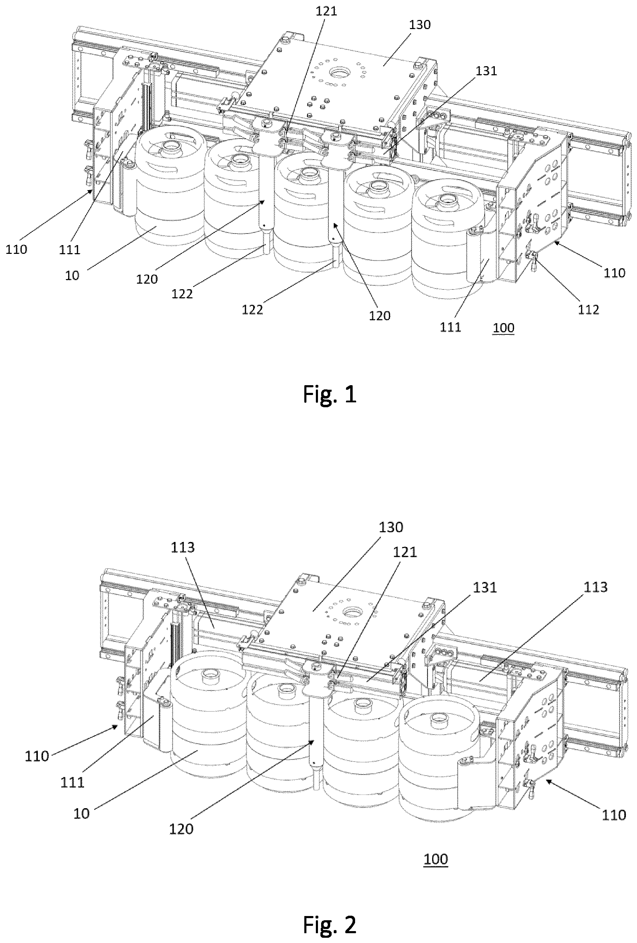

Fig. 1 zeigt eine erfindungsgemäße Vorrichtung zum Behandeln von Behältern 10. Dabei ist insbesondere eine Greifeinrichtung 100 der Vorrichtung gezeigt. Bei den Behältern 10 handelt es sich um großvolumige Getränkebehälter.

In dem in Fig. 1 gezeigten Beispiel werden fünf derartige Behälter 10 von der Greifeinrichtung 100 gegriffen. Die Greifeinrichtung 100 weist ein Oberteil 130 auf. An dem Oberteil 130 ist eine Schiene 131 angeordnet. In der Schiene 131 sind zwei Anschläge 120 mittels Klemmhebel 121 fixiert. Die Anschläge 120 sind voneinander beabstandet in der Schiene 131 angeordnet.

Die Anschläge 120 erstrecken sich von dem Oberteil 130 nach unten. Insbesondere erstrecken sich die Anschläge 120 jeweils in eine Behälterlücke zwischen zwei angrenzenden Behältern 10. Hierzu ist eine Querschnittsfläche der Anschläge 120 entsprechend kleiner als die Behälterlücke ausgebildet.

Insbesondere sind die Anschläge 120 jeweils im Wesentlichen stabförmig ausgebildet. Die Anschläge 120 erstrecken sich hierbei in axialer Richtung der Behälter 10.

An einem unteren Ende der Anschläge 120 ist jeweils ein verschiebbarer Stößel 122 angeordnet. Der verschiebbare Stößel 122 schiebt sich bei Kontakt mit einem Behälter 10 nach oben aus dem restlichen Anschlag 120 heraus.

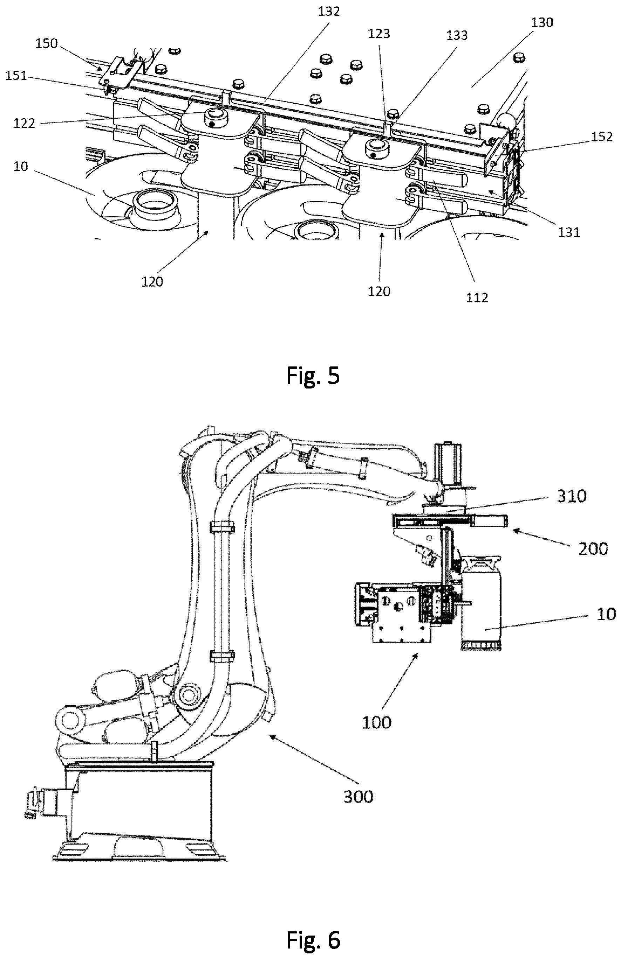

Dies ist insbesondere in Fig. 5 zu erkennen. Dort ist ein oberer Teil des verschiebbaren Stößels 122 mit der Bezugsziffer 122 gekennzeichnet. Drückt nun der untere Teil des Stößels 122 auf einen Gegenstand, insbesondere einen Behälter 10, fährt der obere Teil des Stößels 122 nach oben aus dem restlichen Anschlag 120 hinaus.

Oberhalb des verschiebbaren Stößels 120 ist eine Detektionseinrichtung 150 angeordnet. Die Detektionseinrichtung 150 ist hierbei beispielsweise durch eine Laserschranke ausgebildet und weist eine Laserstrahlerzeugungseinrichtung 151 und eine Reflektionseinheit 152 auf. Wenn der Stößel 122 nach oben verfährt, blockiert er den Laserstrahl und zeigt der Detektionseinrichtung 150 seine Position an.

So kann mittels des verschiebbaren Stößels 122 oder der Detektionseinrichtung 150 verhindert werden, dass die Greifeinrichtung 100 bzw. deren Anschläge 120 beim Verfahren von oben gegen einen Behälter 10 stoßen und diesen beschädigen könnten. Detektiert die Detektionseinrichtung 150 also, dass der Stößel 122 nach oben verschoben worden ist, wird die Bewegung der Greifeinrichtung 100 angehalten. Es handelt sich somit um eine Sicherheitsfunktion, um Beschädigungen an den Behältern 10 zu verhindern.

In Fig. 1 ist zu erkennen, dass die Greifeinrichtung 100 außerdem zwei Greiferbacken 110 aufweist. Die Greiferbacken 110 sind in einer Greifrichtung parallel zur Aufreihungsrichtung der Behälter 10 aufeinander zu bewegbar.

Zum Kontaktieren der Behälter 10 weisen die Greiferbacken 110 jeweils ein behälterabhängiges auswechselbares Formatteil 111 auf. Das Formatteil 111 ist hierbei mittels Klemmhebel 112 an der entsprechenden Greiferbacke 110 fixierbar.

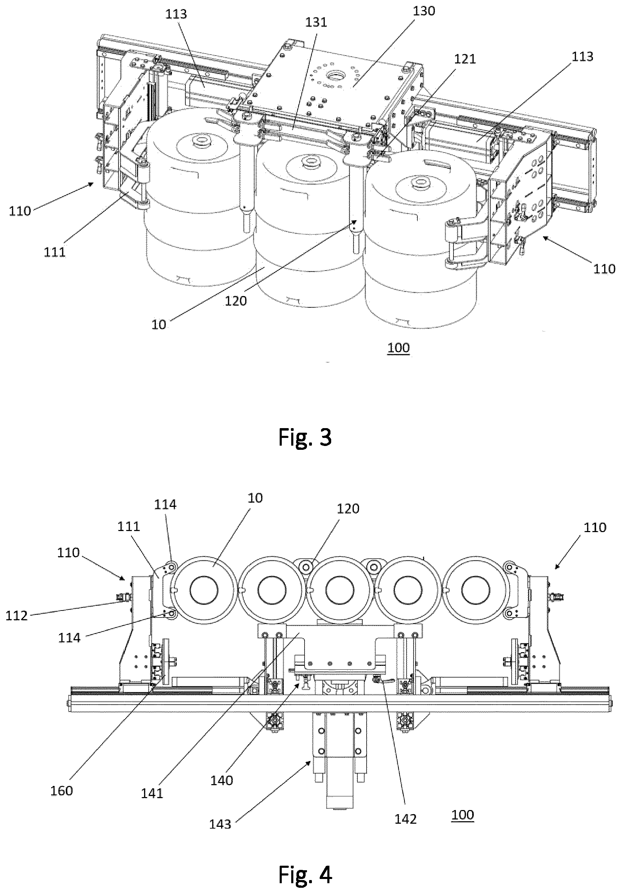

In Fig. 2 und Fig. 3 ist die in Fig. 1 gezeigte Vorrichtung zum Behandeln von Behältern 10 gezeigt. Im Unterschied zu Fig. 1 ist diese jedoch nicht in einem Zustand zum Greifen von fünf Behältern 10 ausgebildet, sondern im Fall von Fig. 2 zum Greifen von vier Behältern 10 und im Fall von Fig. 3 zum Greifen von drei größeren Behältern 10 ausgebildet.

Die in Fig. 1 gezeigte Vorrichtung muss zum Greifen von vier bzw. drei Behältern 10 umgerüstet werden. Hierzu können die Formatteile 111 an den Greiferbacken 110 ausgetauscht werden.

Bei den Formatteilen 111 handelt es sich somit um behälterabhängige auswechselbare Formatteile. Dies ist insbesondere auch bei einem Vergleich der Figs 1, 2 und 3 erkennbar, da die Formatteile 111 jeweils etwas anders geformt ausgebildet sind. Diese sind also genau auf die zu greifenden Behälter 10 angepasst.

Weiterhin erfolgt auch beim Anschlag 120 eine behälterabhängige Anpassung. Dabei wird zum Greifen von einer geraden Anzahl von Behältern 10, wie beispielsweise in Fig. 2, einer der Anschläge 120 demontiert. Der andere Anschlag 120 wird dann mittig in eine Behälterlücke der aufgereihten Behälter 10 gefahren.

Zum Ausrichten werden die Klemmhebel 121 geöffnet, sodass der Anschlag 120 in der Schiene 131 in Greifrichtung verschiebbar ist. An seiner korrekten Position wird der Anschlag 120 dann wieder mittels der Klemmhebel 121 fixiert. Der Anschlag ist also behälterabhängig an in Greifrichtung voneinander beabstandeten unterschiedlichen Positionen an dem Oberteil 130 bzw. dessen Schiene 131 fixierbar.

In Fig. 3 sind wieder zwei Anschläge 120 ausgebildet. Dabei ist der Abstand zwischen den beiden Anschlägen 120 jedoch größer als in Fig. 1, da die zu greifenden Fässer 10 einen größeren Umfang aufweisen.

In Fig. 2 und Fig. 3 ist außerdem einen Linearaktuator, insbesondere Pneumatikzylinder, 113 zum Bewegen der Greiferbacken 110 mit Bezugsziffern versehen dargestellt.

In Fig. 4 ist die in Fig. 1 gezeigte Vorrichtung von unten dargestellt. Hier ist erkennbar, dass das Formatteil 111 der Greiferbacken 110 jeweils zwei Kontaktkörper 114 aufweist. Die Kontaktkörper 114 kommen in einen linienförmigen Kontakt mit einem Außenumfang der Behälter 10.

Es ist erkennbar, dass der linke Behälter 10 an drei Punkten fixiert ist. Genauer ist der Behälter 10 an zwei Punkten mit dem Formatteil 111 in Kontakt und an einem weiteren Punkt mit einem angrenzenden Behälter 10 in Kontakt. Der angrenzende Behälter 10 wiederum ist mit einem der Anschläge 120 und vorzugsweise mit einem weiteren angrenzenden Behälter 10 in Kontakt. Weiterhin ist der angrenzende Behälter 10 auch mit einer Andrückeinrichtung 140 in Kontakt.

Die Greifeinrichtung 100 weist also eine Andrückeinrichtung 140 auf. Die Andrückeinrichtung 140 ist senkrecht zur Greifrichtung und senkrecht zur axialen Richtung der Behälter bewegbar. Wie in Fig. 4 zu erkennen, drückt die Andrückeinrichtung 140 die Behälter 10 in Richtung der Anschläge 120. Die Andrückeinrichtung 140 ist, mittels eines Linearaktuators, insbesondere Pneumatikzylinders, 143 bewegbar. Auch die Andrückeinrichtung 140 weist vorzugsweise ein behälterabhängiges auswechselbares Formatteil 141 auf.

Das Formatteil 141 ist mittels Klemmhebel 142 an der Andrückeinrichtung 140 fixierbar. In Fig. 4 ist außerdem eine Palettengreifeinrichtung 160 gezeigt. die dazu ausgebildet ist, Paletten anzuheben oder abzusenken.

In Fig. 5 ist ein weiteres Detail der vorliegenden Erfindung gezeigt. So weist das Oberteil 130 eine Formateinstellungseinrichtung 132 auf. Die Formateinstellungseinrichtung 132 dient zum korrekten Positionieren der Anschläge 120. Hierzu weist die Formateinstellungseinrichtung 132 eine Ausnehmung 133 auf, in die einen Vorsprung 123 des Anschlags 120 einsetzbar ist.

Mittels der Formateinstellungseinrichtung 132 kann somit sichergestellt werden, dass die Anschläge 120 in einer gewünschten Position relativ zur Schiene 131 angeordnet sind.

Dabei werden in den in Fig. 1, 2 und 3 gezeigten Beispielen unterschiedliche Formateinstellungseinrichtungen 132 verwendet.

Fig. 6 zeigt einen Roboter 300 mit einem Roboterflansch 310. Am Roboterflansch 310 ist als Werkzeug beispielhaft eine der vorab beschriebenen Greifeinrichtungen 100 angeordnet.

Zwischen dem Werkzeug, also der Greifeinrichtung 100, und dem Roboterflansch 310 ist eine Verschiebeeinheit 200 angeordnet.

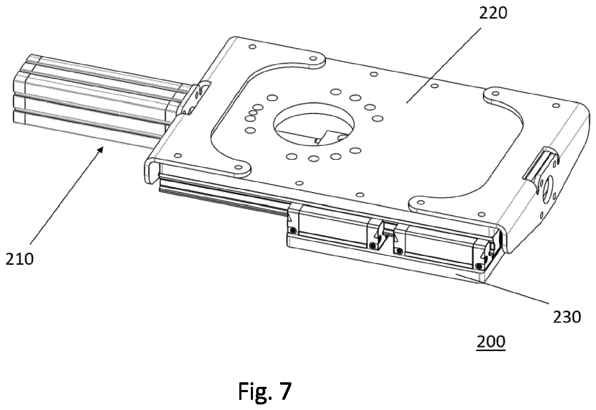

Die Verschiebeeinheit 200 ist im Detail in Fig. 7 gezeigt. Die Verschiebeeinheit 200 ist zumindest im Wesentlichen plattenförmig ausgebildet. Die Verschiebeeinheit weist ein, vorzugsweise plattenförmiges, Oberteil 220 zur Anbindung an den Roboterflansch 310 und ein, vorzugsweise plattenförmiges, Unterteil 230 zur Anbindung an das Werkzeug auf. Mittels einer Linearverstellungseinrichtung 210 ist das Unterteil 230 relativ zu dem Oberteil 220 verstellbar. So lässt sich ein auf den Roboterflansch 310 wirkender Schwerpunkt verschieben. Die führt zu einer konstruktiven Freiheit beim Gestalten des Werkzeugs, da der Schwerpunkt weniger beachtet werden muss.

Es ist festzuhalten, dass die unter Bezug auf einzelne Ausführungsformen bzw. -varianten beschriebenen Merkmale der Erfindung, wie beispielsweise Art und Ausgestaltung der einzelnen Komponenten sowie deren genaue Dimensionierung und räumliche Anordnung auch bei anderen Ausführungsformen vorhanden sein können, außer wenn es anders angegeben ist oder sich aus technischen Gründen von selbst verbietet. Von derartigen, in Kombination beschriebenen Merkmalen einzelner Ausführungsformen müssen außerdem nicht notwendigerweise alle Merkmale in einer betreffenden Ausführungsform realisiert sein.

### Bezugszeichen

- 10: Behälter
- 100: Greifeinrichtung
- 110: Greiferbacke
- 111: Formatteil
- 112: Klemmhebel
- 113: Linearaktuator
- 114: Kontaktkörper
- 120: Anschlag
- 121: Klemmhebel
- 122: Stößel
- 123: Kontaktfläche
- 130: Oberteil
- 131: Schiene
- 132: Formateinstellungseinrichtung
- 133: Kontaktfläche
- 140: Andrückeinrichtung
- 141: Formatteil
- 142: Klemmhebel
- 143: Linearaktuator
- 150: Detektionseinrichtung
- 151: Lasterstrahlerzeugungseinrichtung
- 152: Reflektionseinrichtung
- 160: Palettengreifeinrichtung

- 200: Verschiebeeinheit
- 210: Linearverstellungseinrichtung
- 220: Oberteil
- 230: Unterteil
- 300: Roboter
- 310: Roboterflansch

## Patentansprüche

1. Vorrichtung zum Behandeln von Behältern (10), insbesondere großvolumigen Getränkebehältern, mit einer Greifeinrichtung (100) mit zumindest einer in einer Greifrichtung bewegbaren Greiferbacke (110) und mindestens einen Anschlag (120), der sich von einem Oberteil (130) der Greifeinrichtung (100) in axialer Richtung der jeweiligen Behälter (10) senkrecht zur Greifrichtung nach unten erstreckt,
**dadurch gekennzeichnet, dass**
die Vorrichtung zum Behandeln von Behältern (10) mit unterschiedlichen Durchmessern ausgebildet ist, wobei die mindestens eine Greiferbacke (110) ein behälterabhängiges auswechselbares Formatteil (111) zum Kontaktieren der Behälter (10) aufweist und wobei der Anschlag (120) behälterabhängig an in Greifrichtung voneinander beabstandeten unterschiedlichen Positionen an dem Oberteil (130) der Greifeinrichtung (100) fixierbar ist.

2. Vorrichtung nach Anspruch 1, **dadurch gekennzeichnet, dass** das Formatteil (111) mittels Klemmhebel (112) an der Greiferbacke (110) fixierbar ist und/oder dass der Anschlag (120) mittels Klemmhebel (121) an dem Oberteil (130) fixierbar ist.

3. Vorrichtung nach Anspruch 1 oder 2, **dadurch gekennzeichnet, dass** der Anschlag (120) in einer Schiene (131) des Oberteils (130) in Greifrichtung gleitend geführt ist, wobei der Anschlag (120), insbesondere mittels der Klemmhebel (121), starr an der Schiene (131) fixierbar ist.

4. Vorrichtung nach einem der vorherigen Ansprüche, **dadurch gekennzeichnet, dass** an dem Oberteil (130) eine Formateinstellungseinrichtung (132) angeordnet ist, die zum korrekten Positionieren des Anschlags (120) in behälterabhängigen Positionen am Oberteil (130) ausgebildet ist.

5. Vorrichtung nach einem der vorherigen Ansprüche, **dadurch gekennzeichnet, dass** der Anschlag (120) eine geringere Querschnittsfläche als eine Behälterlücke zwischen in Greifrichtung aufgereihten Behälter (10) aufweist.

6. Vorrichtung nach einem der vorherigen Ansprüche, **dadurch gekennzeichnet, dass** der Anschlag (120) zumindest im Wesentlichen stabförmig ausgebildet ist und sich in axialer Richtung der Behälter (10) erstreckt.

7. Vorrichtung nach einem der vorherigen Ansprüche, **dadurch gekennzeichnet, dass** der Anschlag (120) einen in axialer Richtung zu den jeweiligen Behältern (10) relativ zum restlichen Anschlag (120) verschiebbaren Stößel (122) aufweist, und wobei die Vorrichtung eine Detektionseinrichtung (150) zum Detektieren einer Position des Stößels (122) aufweist.

8. Vorrichtung nach einem der vorherigen Ansprüche, **dadurch gekennzeichnet, dass** die Greifeinrichtung (100) mindestens zwei, insbesondere baugleiche, Anschläge (120) aufweist, die in Greifrichtung voneinander beabstandet angeordnet sind.

9. Vorrichtung nach einem der vorherigen Ansprüche, **dadurch gekennzeichnet, dass** die Greifeinrichtung (100) eine in einer Richtung senkrecht zur Greifrichtung und senkrecht zur axialen Richtung der Behälter (10) bewegbare Andrückeinrichtung (140) aufweist.

10. Vorrichtung nach Anspruch 9, **dadurch gekennzeichnet, dass** die Andrückeinrichtung (140) ein, insbesondere behälterabhängiges, auswechselbares Formatteil (141) aufweist.

11. Vorrichtung nach einem der vorherigen Ansprüche, **dadurch gekennzeichnet, dass** die Greifeinrichtung (100) zwei Greiferbacken (110) aufweist, die zum Greifen von Behältern (10) in Greifrichtung aufeinander zu bewegbar sind.

12. Vorrichtung nach einem der vorherigen Ansprüche, **dadurch gekennzeichnet, dass** die Greifeinrichtung (100) zusätzlich eine heb- und/oder senkbare Palettengreifeinrichtung (160) aufweist.

13. Vorrichtung nach dem Oberbegriff des Anspruchs 1, **dadurch gekennzeichnet, dass** die Vorrichtung einen Verschiebeeinheit (200) aufweist, die zur Anbindung der Greifeinrichtung (100) an einen Roboterflansch (310) ausgebildet ist, wobei die Verschiebeeinheit (200) zumindest eine Linearverstellungseinrichtung (210) aufweist, mittels derer die Position der Greifeinrichtung (100) relativ zum Roboterflansch (310) verstellbar ist.
